Europäisches Patentamt

European Patent Office

Office européen des brevets

(11) Publication number: **0 058 156**
**B1**

# EUROPEAN PATENT SPECIFICATION

(45) Date of publication of patent specification: **16.04.86**

(21) Application number: **81901349.1**

(22) Date of filing: **22.08.80**

(86) International application number:
**PCT/US80/01025**

(87) International publication number:
**WO 82/00621 04.03.82 Gazette 82/07**

(51) Int. Cl.⁴: **B 63 B 21/00, B 63 B 35/44, F 16 L 27/04**

(54) MOORING SYSTEM BEARING FOR A TENSIONED LEG PLATFORM.

(43) Date of publication of application:
**25.08.82 Bulletin 82/34**

(45) Publication of the grant of the patent:
**16.04.86 Bulletin 86/16**

(84) Designated Contracting States:
**FR GB**

(56) References cited:
**FR-A-2 323 089**
**FR-A-2 394 735**
**FR-A-2 407 856**
**US-A-4 062 313**
**US-A-4 064 822**
**US-A-4 098 527**
**US-A-4 169 424**

(73) Proprietor: **VETCO OFFSHORE, INC.**
**250 West Stanley Avenue**
**Ventura, CA 93001 (US)**

(72) Inventor: **JONES, Darrell Lee**
**1991 Foster Avenue**
**Ventura, CA 93001 (US)**

(74) Representative: **Johnson, Terence Leslie**
**Edward Evans & Co. Chancery House 53-64**
**Chancery Lane**
**London WC2A 1SD (GB)**

# Description

Background of the invention

This invention relates to mooring systems for tensioned leg platforms and in particular to a bearing located within a mooring tunnel to absorb tension leg strains.

After an offshore well is drilled from a floating platform, it may be desirable to produce the well to a later-installed tensioned leg platform. These tensioned leg platforms, while supported by the buoyancy of the water, are not freely floating but are tied back to a plurality of anchors on the seabed.

An anchor template is affixed to the seabed, and an anchor connector with a flexible element connects the lower end of a tension line to an anchor template. The tension line which is formed of a length of heavy wall tubular elements connected by threaded joints is connected to an upper flexible element located within the lower hull structure of the tensioned leg platform. A tension load base block which carried the reaction loads between the tension line and the structural framing of the platform is located above the water level, and a tension adjustment assembly is located at the support elevation, with means for sensing the load also included.

A lower spherical flex element is required at the anchor connector. An upper spherical flex element is also located at the tensioned leg platform. These permit the platform to translate horizontally due to the forces of wind, waves, and current. These flexible elements allow the tension leg to deflect locally at the anchor template and at the lower surface of the platform hull. Spherical flex elements of this type are illustrated in French Patents A—2 323 089 and A—2 394 735. In theory, the length of the tension leg is held constant by the threaded nut in the tension adjustment and support assembly.

However, large ocean swells cause the waterline to move vertically relative to the platform as it is anchored by the tension line, thus changing the displacement and in turn the net buoyant force of the platform. This change in buoyant force causes a variation in tension. For instance with a nominal tension of 1,000 tons, the cyclic variation due to waves in a 100-year storm causes the tension to vary in the range of plus and minus 400 tons.

This variation in tension causes a resultant variation in the strain of the tension line. As the strain varies in the tension line, the upper flexible element is forced to move vertically relative to the tensioned leg platform structure as a function of the strain variation or stretch in the portion of the tension leg between the support location on the platform and the flexible element. This distance is in the order of 100 feet (30.48 m) and the movement is typically in the order of 1-1/2 inches (3.81 cm).

This relative vertical motion is concurrent with large horizontal offsets of the platform relative to the anchor template which causes the tension line to assume an angle relative to the vertical. The horizontal component of the tension in the line is then reacted as a side load against the lower hull structure, or mooring tunnel, of the platform through the upper flexible element. Side loads due to this may be as great as 100 tons. Thus, the upper flexible element is forced to oscillate vertically relative to the platform as it is simultaneously loaded horizontally against the interior wall of the platform mooring tunnel. French Patent A—2 407 856 illustrates sliding bearings to permit the movement. This creates an extremely high wear situation at this location where components are extremely difficult to replace.

French Patent A—2 394 735 illustrates a method of dealing with the guidance of risers which have the same relative movement problem, but which are not subjected to the same high loading. In this case, wheels or rollers are substituted for the bearings.

According to the present invention there is provided a mooring system as described in claims 1 and 7.

Preferred embodiments are described in the dependant claims.

When the platform is offset and the tension line assumes an angle relative to vertical, the horizontal component of the load causes considerable friction between the bearing sleeve and the mooring tunnel. Movement of the sleeve is thereby resisted while the elastomeric bearing absorbs differential movement, thereby avoiding friction forces concurrent with the high horizontal loading. When there is no offset, it follows that there is low horizontal force. Movement at this time permits the bearing surface to slide within the mooring tunnel because of the low resistance to sliding. However, wear is minimal since this motion is not concurrent with high horizontal forces.

Brief description of the drawings

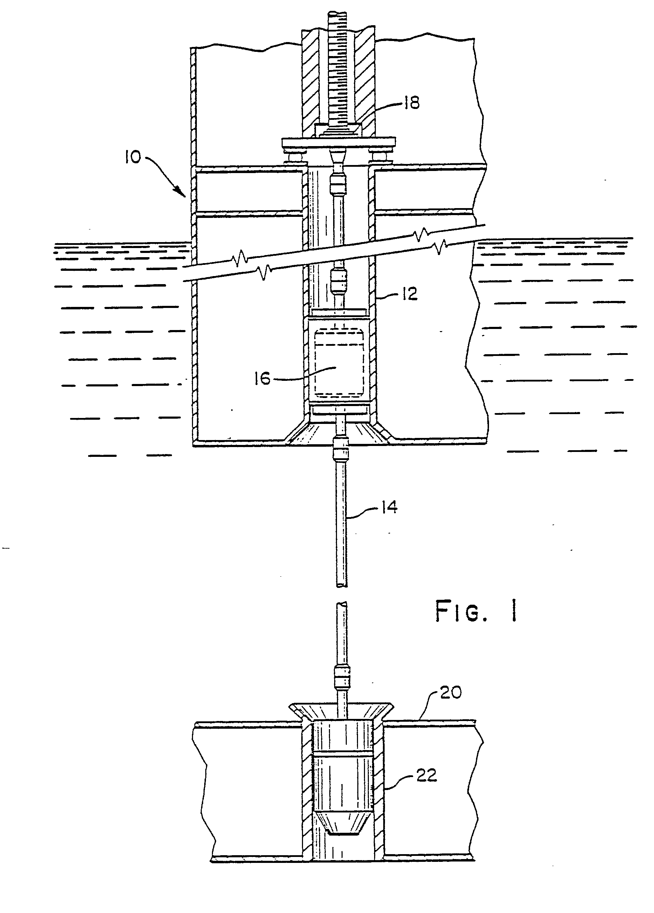

Figure 1 illustrates the general arrangement of a platform, an anchor, and a tension leg,

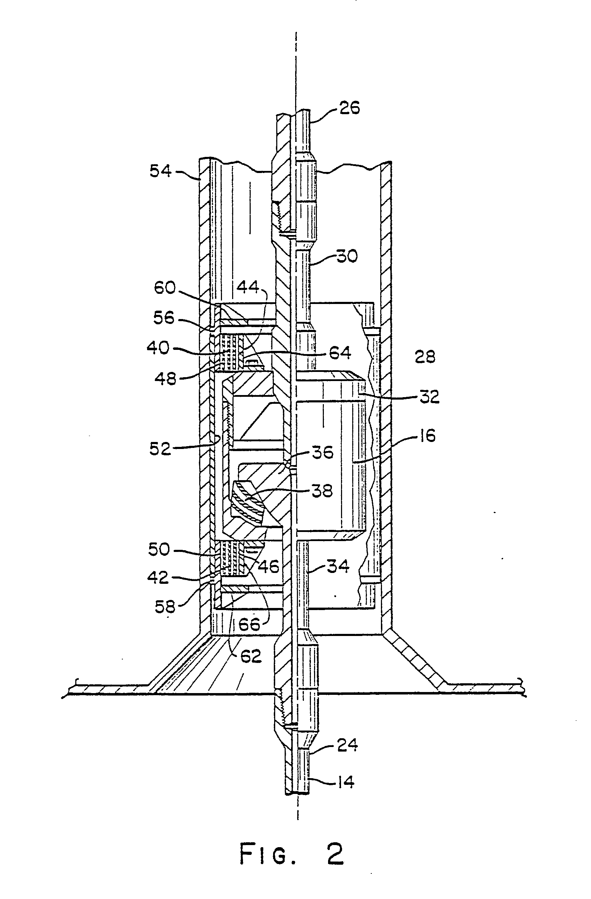

Figure 2 is a detail of the bearing located within the mooring tunnel, and

Figure 3 is a schematic drawing illustrating the forces acting on the bearing sleeve.

Description of the preferred embodiment

A platform 10 includes a mooring tunnel 12 through which passes the tension leg 14. This tension leg includes an upper flexible connector 16, and the leg is supported above the waterline by a locking collar 18. An anchor template 20 is secured to the seabed through driven, drilled, and cemented pilings. The template includes a hollow cylindrical anchor tube 22 which forms a cylindrical opening through the template 20. The tension leg 14 includes a lower tension leg 24 which is connected to the anchor and an upper tension leg 26 which is connected to the platform support elevation. The mooring system bearing apparatus 28 includes an upper tension leg connecting means 30 which has an external flexible connector body 32 rigidly connected thereto. A lower tension leg connecting means 34 has an internal body 36 rigidly connected thereto. The universal flexible connector 16 includes a spherical elastomeric bearing 38 which permits the connector to conduct axial forces through the tension legs while it permits pivotal motion of the lower tension leg 24 around the connector.

An upper cylindrical elastomeric bearing 40 and a lower elastomeric cylindrical bearing 42 each are of cylindrical shape and consist of concentric metallic shims bonded to intermediate regions of elastomeric material. This arrangement provides for a high spring rate or low resilience in the radial direction of the bearing while it allows for a relatively small spring rate or high resilience in the axial direction. A first side 44 and 46, respectively, of each of the elastomeric bearings is secured to the external body 32. The second side 48 and 50, respectively, of each elastomeric bearing is attached to an elongated bearing sleeve 52 which surrounds the external body 32.

The bearing sleeve 52 is sized and shaped to conform to the inside of the mooring tunnel 54 and is free to slide therewithin. The connection between the elastomeric bearings and the bearing sleeve is conveniently made with support rings 56 and 58 which forces the bearings 40 and 42 to operate together. Each of these includes a stop portion 60 and 62, respectively. The external body 32 employs rings 64 and 66 which not only connect to the bearings but also operate as stop members in conjunction with elements 60 and 62, respectively, with which they interact.

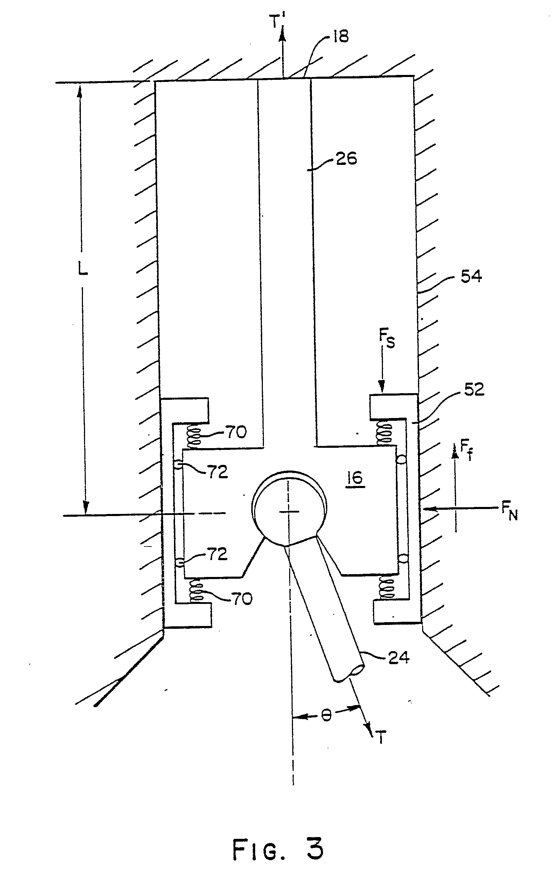

Referring now to Figure 3, the upper tension leg 26 is supported at support 18 with the universal flexible connector 16 being located at a length L below the support. The upper leg 26 expands from its unloaded condition as a function of its length L, its modulus of elasticity, and its cross-sectional area. Initial tensioning of the legs results in an elongation to a length $L_o$ which is an assumed starting point for the purposes of this discussion. It is also assumed at this time that the bearing sleeve 52 floats with the connector 16 to this initial $L_o$ condition.

If it is now assumed that the lower leg 24 assumes an angle θ with the same initial vertical loading T' and a corresponding slight increase in T from the original vertical condition, there is no vertical movement of the connector 16; but the horizontal component of T places a force $F_n$ in the amount of Tθ. With this force operating between the side of the bearing sleeve 52 and the mooring tunnel 54, the bearing can resist a maximum vertical force of $C_fT \sin\theta$, where $C_f$ is the coefficient of friction.

If the loading T now varies at angle θ, there is a related variation in T' through the upper leg 26. This causes the change in the strain of this leg and a movement of a flexible connector 16. The elastomeric bearings 40 and 42 are represented in this illustration by springs 70 and rollers 72 which represent the soft or resilient action in the vertical direction and the relatively stiff action in the horizontal direction. Movement of the connector 16 from its initial position causes a deflection of the elastomeric bearing 70 and depending on the spring constant establishes a force $F_s$ which is imposed on the bearing sleeve 52. So long as this force $F_s$ is less than the maximum allowable friction $F_f$, there will be no relative movement between the bearing 52 and the mooring tunnel 54. The elastomeric bearings should be soft in the vertical direction to permit maximum movement without sliding of the bearing surface. The bearings should be stiff in the other direction primarily because this type construction permits a bearing which will not buckle and extrude under high side loadings.

For an understanding of the operation of this bearing, it will be discussed first with essentially vertical loads, secondly with a variation in load at a given offset angle θ, and thirdly with the effect of varying offsets. In the vertical direction there is essentially a zero force $F_n$; and, accordingly, there is no resistance $F_f$ to friction. In such a situation the bearing sleeve 52 is free to move up and down with the flexible connector 16. In this situation, however, there is only nominal wear between the bearing and the mooring tunnel 54 since there is no side load or force on the rubbing surface.

If it is now assumed that the bearing system is operating at an angle θ and that the bearing sleeve 52 is in its initial position, the resistance to sliding of the bearing sleeve is a function of the stiffness and length of upper leg 26, the stiffness or spring rate of the sum total of the elastomeric bearings, and the coefficient of friction between the bearing sleeve 52 and the mooring tunnel 54. A force $F_n$ and a corresponding maximum friction resistance $F_f$ is established with the initial tension. During the fluctuating load cycle, the tension T is increased to a maximum value above the initial force and to a minimum value which still represents a positive tension T but which is lower than the initial value. The horizontal force $F_n$ varies correspondingly from a maximum to minimum value as does the maximum friction resistance $F_f$.

At the same time the elongation of the upper leg 26 varies with the tension; and, accordingly, the flexible connector 16 moves. Operating through the elastomeric bearing, this movement places a varying force $F_s$ on the bearing sleeve. This is a function of the resultant tension T'. It can be seen and mathematically developed that there is more resistance to sliding of the bearing with the inceased load T than with the decreased load T. So long as the load cycles are within these allowable limits, there would be no movement of the bearing sleeve 52. Should it cycle so that one of the limits is exceeded, the sleeve will move to a new neutral position; and so long as the load range is within the calculated value, there will be no additional movement of the sleeve on succeeding cycles.

For any given angle the required spring constant can be calculated based on the above-described considerations. Additional refinement may be made by considering the effect of the spring constant on the transmittal of load between the lower tension leg 24 and the upper tension leg 26.

If it is now assumed that at varying angles θ there is a given fluctuation in the vertical load, it can be seen that with θ equal to zero there is no restraint on the vertical movement. If on the other hand the angle is in the order of 10 to 15 degrees, there is a high resistance to friction due to the initial tensioning of the leg. Fluctuations in the load increase this friction with an increased load and decrease it with a decreased load. However, because of the high value of the initial load, there would be no moving of the sliding bearing at the high offsets (assuming a proper stiffness rate of the spring). As the angle θ increases from zero toward the maximum moment, there is sliding of the bearing sleeve through a portion of the travel. With the small angle there is a relatively small resistance to the sliding friction; and, accordingly, it is only when the spring rate force exceeds the friction force that the bearing moves. In this situation there is some sliding of the bearing surface but only through a portion of the travel. This, however, is at those conditions where there is small side load on the bearing and, consequently, a relatively small amount of wear in the face of friction.

While for the purposes of discussion it was assumed that the bearing sleeve (52) was always in its neutral position, it can be seen that regardless of what the initial position is at any time, once the resistance to sliding friction is exceeded, the bearing will be moved to its neutral position and repeated cycles will be taken through the flexing of the elastomeric bearings rather than the sliding within the mooring tunnel. Furthermore, in order to protect the elastomeric bearing from failure in the event of excess strain, stops 60, 62, and 64, and 66 operate to limit the strain. Under such an extreme condition, the excess strain is absorbed by movement of the sliding bearing sleeve within the mooring tunnel.

The two elastomeric bearings 40 and 42 are axially spaced. They, therefore, operate effectively to resist bending of the external flexible connector body 32 as the flexible connector absorbs the angular movement. A more uniform distribution of horizontal loads through the elastomeric bearing is accomplished if the pivot point can be placed at an elevation between the two bearings.

It can be seen that a mooring system bearing for a tensioned leg platform has been provided which avoids wear under the high wear conditions existing with a high horizontal loading, and yet which permits sliding movement and movement to a neutral position under other conditions.

**Claims**

1. A mooring system bearing apparatus for a tensioned leg platform having a vertical mooring tunnel (54) through which the tension leg passes comprising: an upper tension leg connecting means (26); a lower tension leg connecting means (24); a universal flexible connector (16) having an external body (32) rigidly connected to said upper connector means, an internal body (36) rigidly connected to said lower connector means, and means for conducting axial forces along the tension leg through the connector while permitting pivotal motion of the lower tension leg around the connector: characterized by at least one cylindrical elastomeric bearing (40, 42) having a first side attached to said external body; an elongated bearing sleeve (52) surrounding said external body and attached to a second side of said elastomeric bearing, said sleeve sized and shaped to slidably conform to the inside of said mooring tunnel.

2. An apparatus as in Claim 1 characterised by two axially-spaced elastomeric bearings (40, 42), whereby resistance to bending of said upper connector body is increased.

3. An apparatus as in Claim 2 characterised in that one of said elastomeric bearings is located above the pivot point of said flexible connector and the other of said bearings is connected below the pivot point of said flexible connector.

4. An apparatus as in any one of Claims 1, 2, or 3 characterised in that said elastomeric bearings are significantly more resilient in the axial direction than in the radial direction.

5. An apparatus as in Claim 4 characterised in that said bearing sleeve is cylindrical.

6. An apparatus as in Claim 4 characterised by also rigid interacting stops (60, 62) on said bearing sleeve and said upper connecting means whereby the axial resilient motion of said elastomeric bearing is limited.

7. A mooring arrangement for a tensioned leg platform having a vertical mooring tunnel (54) therethrough comprising: an upper tension leg (26) passing through said tunnel; means for supporting and tensioning said tension leg from the platform at an upper elevation; a lower tension leg (24); means for securing said lower tension leg to the seabed; a pivotally flexible connector (16) connecting said upper and lower tension legs, and located in said mooring tunnel, an upper body (32) of said connector rigidly secured to said upper tension leg, and a lower body (36) of said connector rigidly connected to said lower tension leg; characterized by a bearing sleeve (52) sized to slidably fit within said mooring tunnel; and at least one cylindrical elastomeric bearing (40, 42) having one side affixed to said upper body and the other side affixed to said bearing sleeve.

8. An arrangement as in Claim 7 characterised by two axially-spaced elastomeric bearings (40, 42), whereby resistance to bending of said upper connector body is increased.

9. An apparatus as in any one of Claims 7 or 8 characterised in that said elastomeric bearings are significantly more resilient in the axial direction than in the radial direction.

10. An apparatus as in Claim 9 characterised by also having rigid interacting stops (64, 66, 60, 62) on said bearing sleeve and said upper connecting means whereby the axial resilient motion of said elastomeric bearing is limited.

**Patentansprüche**

1. Vertäusystem-Lagerungsgerät für eine mit Spannschenkeln versehene Plattform mit einem senkrechten, vom Spannschenkel durchsetzten Vertäutunnel (54), umfassend ein oberes Spannschenkelverbindungsmittel (26), ein unteres Spannschenkelverbindungsmittel (24), ein flexibles Universalverbindungsglied (16) mit einem fest mit jenem oberen Verbindungsmittel verbundenen Aussenkörper (32) und einem fest mit jenem unteren Verbindungsmittel verbundenen Innenkörper (36) sowie Mitteln zum Leiten axialer Kräfte entlang dem Spannschenkel durch das Verbindungsglied bei gleichzeitiger Ermöglichung einer Schwenkbewegung des unteren Spannschenkels um das Verbindungsglied, gekennzeichnet durch mindestens eine zylindrische kautschukelastische Lagerung (40, 42) mit einer ersten, an jenem Aussenkörper angebrachten Seite, eine längliche jenen Aussenkörper umgebende und an einer zweiten Seite jener kautschukelastischen Lagerung angebrachte Lagerhülse (52), wobei letztere so dimensioniert und gestaltet ist, dass sie gleitend der Innenseite des besagten Vertäutunnels entspricht.

2. Gerät nach Anspruch 1, gekennzeichnet durch zwei axial voneinander beabstandete kautschukelastische Lagerungen (40, 42), wodurch der Biegewiderstand jenes oberen Verbindungskörpers erhöht wird.

3. Gerät nach Anspruch 2, dadurch gekennzeichnet, dass eine der besagten kautschukelastischen Lagerungen oberhalb des Schwenkpunkts jenes flexiblen Verbindungsglieds angeordnet und die andere der besagten Lagerungen unterhalb des Schwenkpunkts jenes flexiblen Verbindungsglieds angeschlossen ist.

4. Gerät nach einem der Ansprüche 1, 2 oder 3, dadurch gekennzeichnet, dass besagte kautschukelastische Lagerungen in axialer Richtung wesentlich federnder als in radialer Richtung sind.

5. Gerät nach Anspruch 4, dadurch gekennzeichnet, dass besagte Lagerhülse zylindrisch ist.

6. Gerät nach Anspruch 4, dadurch gekennzeichnet, dass es ebenfalls starre zusammenwirkende Anschläge (60, 62) an jener Lagerhülse und jenem oberen Verbindungsmittel aufweist, wodurch die axiale federnde Bewegung der besagten kautschukelastischen Lagerung eingeschränkt wird.

7. Vertäuanordnung für eine mit Spannschenkeln versehene Plattform mit einem diese durchlaufenden senkrechten Vertäutunnel (54), umfassend einen jenen Tunnel durchsetzenden oberen Spannschenkel (26), Mittel zum Stützen und Spannen jenes Spannschenkels an der Plattform auf einer oberen Höhe, einen unteren Spannschenkel (24), Mittel zur Verankerung dieses unteren Spannschenkels im Meeresboden sowie ein jene oberen und unteren Spannschenkel verbindendes und in besagtem Veräutunnel angeordnetes, schwenkbar flexibles Verbindungsglied (16), wobei ein oberer Körper (32) dieses Verbindungsglieds fest mit jenem oberen Spannschenkel verbunden ist und ein unterer Körper (35) dieses Verbindungsglieds fest mit jenem unteren Spannschenkel verbunden ist, gekennzeichnet durch eine Lagerhülse (52), die so gestaltet ist, dass sie gleitend in jenen Vertäutunnel passt, und mindestens eine zylindrische kautschukelastische Lagerung (40, 42), deren eine Seite an jenem oberen Körper und deren andere Seite an jener Lagerhülse befestigt ist.

8. Anordnung nach Anspruch 7, gekennzeichnet durch zwei axial voneinander beabstandete kautschukelastische Lagerungen (40, 42), wodurch der Biegewiderstand jenes oberen Verbindungsgliedkörpers erhöht wird.

9. Gerät nach Anspruch 7 oder 8, dadurch gekennzeichnet, dass jene kautschukelastischen Lagerungen in axialer Richtung wesentlich federnder als in radialer Richtung sind.

10. Gerät nach Anspruch 9, dadurch gekennzeichnet, das es ebenfalls starre zusammenwirkende Anschläge (64, 66, 60, 62) an jener Lagerhülse und jenem oboren Verbindungsmittel aufweist, wodurch die axiale federnde Bewegung dieser kautschukelastischen Lagerung eingeschränkt wird.

**Revendications**

1. Un dispositif d'appui d'un système d'amarrage pour une plate-forme sur jambes à câbles tendus ayant un tunnel d'amarrage vertical (54) au travers duquel passe la jambe tendue, comprenant: un moyen de raccordement supérieur d'une jambe tendue (26); un moyen inférieur de raccordement d'une jambe tendue (24); un raccord souple universel (16) ayant un corps externe (32) relié de façon rigide audit moyen de raccordement supérieur, un corps interne (36) relié de façon rigide audit moyen de raccordement inférieur, et des moyens de transmission des forces axiales le long de la jambe tendue par l'intermédiaire du raccord tout en premettant un mouvement de pivotage de la jambe tendue inférieure autour du raccord: caractérisé par au moins un appui cylindrique en élastomère (40, 42) ayant un premier côté attaché audit corps externe; un manchon d'appui allongé (52) entourant ledit corps externe et étant attaché à un second côté dudit appui en élastomère, ledit manchon étant de taille et de forme telles qu'il s'adapte de façon coulissable à l'intérieur dudit tunnel d'amarrage.

2. Un dispositif selon la revendication 1 caractérisé par deux appuis en élastomère à écartement axial (40, 42), grâce auxquels la résistance au fléchissement dudit corps de raccordement supérieur est accrue.

3. Un dispositif selon la revendication 2 caractérisé en ce que l'un desdits appuis en élastomère est situé au-dessus du point de pivotage dudit raccord souple et l'autre desdits appuis est relié en-dessous du point de pivotage dudit raccord souple.

4. Un dispositif selon l'une quelconque des revendications 1, 2, ou 3 caractérisé en ce que lesdits appuis en élastomère sont significativement plus élastiques dans la direction axiale que dans la direction radiale.

5. Un dispositif selon la revendication 4 caractérisé en ce que ledit manchon d'appui est cylindrique.

6. Un dispositif selon la revendication 4, caractérisé en ce qu'il possède également des arrêts interactifs rigides (60, 62) sur ledit manchon d'appui et sur ledit moyen supérieur de raccordement grâce auxquels le mouvement élastique axial dudit appui en élastomère est limité.

7. Un arrangement d'amarrage pour une plateforme sur jambes à câbles tendus ayant un tunnel d'amarrage vertical (54) qui le traverse, comprenant: une jambe tendue supérieur (26) traversant ledit tunnel; des moyens d'appui et de mise sous tension de ladite jambe tendue à partir de la plate-forme à une élévation supérieure; une jambe tendue inférieure (24); des moyens d'attache de ladite jambe tendue inférieure au fond de la mer; un raccord souple de façon pivotable (16), reliant lesdites jambes tendues supérieure et inférieure, et, situé dans ledit tunnel d'amarrage, un corps supérieur (32) dudit raccord fixé de façon rigide à ladite jambe tendue supérieure, et un corps inférieur (36) dudit raccord relié de façon rigide à ladite jambe tendue inférieure; caractérisé par un manchon d'appui (52) de taille telle qu'il s'adapte de façon coulissable dans ledit tunnel d'amarrage; et au moins un appui cylindrique en élastomère (40, 42) ayant un côté attaché sur ledit corps supérieur et l'autre côté attaché sur ledit manchon d'appui.

8. Un arrangement selon la revendication 7 caractérisé par deux appuis en élastomère à écartement axial (40, 42), grâce auxquels la résistance au fléchissement dudit corps de raccordement supérieur est accrue.

9. Un appareil selon l'une quelconque des revendications 7 ou 8 caractérisé en ce que lesdits appuis en élastomère sont significativement plus élastiques dans la direction axiale que dans la direction radiale.

10. Un appareil selon la revendication 9 caractérisé en ce que il possède également des arrêts interactifs rigides (64, 66, 60, 62) sur ledit manchon d'appui et sur ledit moyen de raccordement supérieur grâce auxquels le mouvement élastique axial dudit appui en élastomère est limité.

FIG. 1

FIG. 2

FIG. 3